# EUROPEAN PATENT APPLICATION

(11) **EP 1 085 023 A1**
(43) Date of publication of application: **21.03.2001**
(21) Application number: 99203088.2
(22) Date of filing: 20.09.1999
(51) Int. Cl.: C07K 1/107, A23J 3/00

(54) **Partially crosslinking proteins with transglutaminase**

(71) Applicant: NEDERLANDSE ORGANISATIE VOOR TOEGEPAST-NATUURWETENSCHAPPELIJK ONDERZOEK TNO, 2628 VK Delft (NL)
(72) Inventor: Boumans, Johannes Wilhelmus Leonardus, 1191 RH Ouderkerk aan de Amstel (NL); Wijngaards, Gerrit, 3972 GS Driebergen-Rijsenburg (NL)
(74) Representative: de Bruijn, Leendert C.

(57) **Abstract**

The invention pertains to a process for partially crosslinking proteins using transglutaminase. The transglutaminase is coupled to a material which allows control of the crosslinking process as well as separation of the enzyme from the crosslinked product. The transglutaminase is preferably of bacterial origin, and can be immobilised on a solid support. Crosslinking is controlled in such a manner that from 2 to 50 protein molecules are coupled, corresponding with a molecular weight of the crosslinked product between 10 and 1000 kDa.

## Description

The present invention relates to a method of producing crosslinked proteins by transglutaminase and to the use of such proteins in food.

Crosslinked proteins are used in foodstuffs as for thickening or binding purposes, and for improving end product quality. Proteins can be crosslinked with transglutaminase (EC 2.3.2.13), an enzyme capable of catalysing acyl transfer reactions introducing covalent crosslinks between proteins as well as proteins and peptides and primary amines. During protein crosslinking, ε-amino groups of lysine residues and γ-carboxamide groups of glutamine residues act as acyl receptors and acyl donors, respectively. This crosslinking causes covalent isopeptide binding of a protein to itself or to another protein, which results in changes in molecular size, often associated wit changes in functional and nutritional properties.

Currently, proteins are crosslinked with transglutaminase which is added to the food-producing system (Nielsen, *Food Biotechnology* (1995) 9:119-156). Although this in general can lead to improvement of the protein functional properties, disadvantages of this current method are that the transglutaminase remains in the food product and crosslinking results in very high molecular weight protein polymers and networks. A high degree of protein crosslinking does not necessarily result in the desired functionality of the protein. Another disadvantage is that uncontrolled reaction with reactive groups present in the foodstuff, from proteins or other nature, results in protein networks or complex molecules of unknown dimensions and composition.

In order to influence the degree of crosslinking one can, in the case of cofactor-dependent crosslinking enzymes, like for instance calcium-dependent transglutaminase, remove the cofactor, by binding or otherwise, after a certain reaction time. Transglutaminases suitable for large-scale applications are available from microbial origin and are, however, cofactor-independent. When using cofactor-independent enzymes, limited degrees of crosslinking can be obtained by heat treatment of the reaction system. In general such a treatment induces negative side effects on protein functionality and is therefore undesirable to apply. In addition, not all reaction systems are suitable to undergo heat treatment. Both methods leave unwanted inactive enzyme in the end product and do not solve the problem of a-specific protein network formation.

It has been found according to the invention that crosslinked proteins with improved properties can be obtained by reaction of protein substrates for transglutaminase (TG) with a TG bound to a bulky and/or solid material, resulting in a limited degree and type of crosslinking. These crosslinked proteins can be used as protein ingredients in foodstuffs. The coupling of the TG to the bulky or solid material allows control of the crosslinking reaction by the moderating effect of the bulky (e.g. macromolecular) material, resulting in production of predominantly small polymers. At the same time the coupling of the TG increases heat and pH stability, allows the enzyme to be separated from the partially crosslinked product if that is desired and allows re-use of the enzyme. Thus, protein crosslinking with bound (immobilised) transglutaminase can be optimised by separation of the enzyme from the partially crosslinked product at a moment where there are still reactive groups available for crosslinking. The process of the invention is further characterised in the appending claims.

Transglutaminase (TG) can be obtained from several plant and animal sources, see Zhu et al. Appl. *Microbiol. Biolechnol.* (1995) 44:277-282 and references cited therein. It had not been economically feasible to apply TG in food processing on an industrial scale until the search for TG derived from micro-organisms had been successful. In particular, transglutaminases have been found in *Streptoverticillium* sp. and *Streptomyces* sp. (Ando et al. Agric. Biol. Chem. (1989) 53:2613-2617). Among others *Streptoverticillium griseocarneum, Streptoverticillium cinnamoneum, Streptoverticillium mobaraense* and *Bacillus subtilis* (US 5,948,622) have been found to produce TG. Klein et al. J. Bacteriology (1992) 174:2599-2605 identified TG in *Physarum polycephalum.* It is likely that more microorganisms produce TG. Also engineered microorganisms could serve as a source for TG. The invention relates to the use of any kind of TG. In particular, the use of microbial TG is preferred according to the invention.

Immobilisation of enzymes on a solid support is well known methodology for a skilled person (Swaisgood (1991) in Food Enzymology, Fox, PF., Ed., Elsevier Applied Science, London, Vol. 1, pp 219-270).

The term "proteins" as used in the present specification and claims should be understood to comprise any biopolymers having at least partial peptidic properties, such as proteins, peptides, glycoproteins, lipoproteins, proteoglycans etc. Such proteins can undergo crosslinking by TG, i.e. contain at least glutamine and/or lysine. Instead of lysine, other aminoacid residues capable of forming an isopeptide bond with glutamine may be present. The glutamine and lysine will often be present within the same molecule, but it is also possible to use the present process for coupling two different proteins, in which only one contains available glutamine residues and/or only one contains available lysine residues, or similarly with three or even more different proteins. Such mixed crosslinking results in heteropolymers, which are also covered by the instant invention. Examples of suitable proteins are whey and soy proteins, cereal proteins such as gluten, meat proteins, myosin and actomyosin, α- and β-casein and albumins like α-lactalbumin and BSA. These proteins will have different amounts and contents of reactive groups. According to the invention the crosslinking with TG is stopped at a moment that there is still at least one active group in the protein substrate available for crosslinking. This can be determined by detecting the presence of remaining reactive glutamine or amino groups by well known colorimetric or fluorometric methods (Ikura et al. *Agric. Biol. Chem.* (1980) 44:1567-1573 and Huang et al. (1994) Paper No. FSR 42-94 of the *Journal Series of the Department of Food Science,* North Carolina State University) after the crosslinked protein is separated from the TG.

The process according to the invention results in protein polymer products of controlled dimension. The desired dimension of the product that is obtained depends on the specific application of the particular batch of protein polymer that is produced. The dimension can be characterised using various parameters. One could look for instance at the molecular weight. Preferably the crosslinked protein is more than 10 kDa and less than 1000 kDa. The dimension of the product can also be defined in terms of electrophoretic mobility on gels, relative to marker proteins with known dimensions and/or properties. A skilled person will be able to define the electrophoretic behaviour in relation with an intended use. Another definition is in terms of how many substrate protein molecules constitute the crosslinked protein polymer, or in other words in terms of n-merisation. For a crosslinked product n should be at least 2, preferably at least 4 and smaller than 50, preferably smaller than 30. Yet another definition is in terms of a percentage of the available groups for crosslinking in the protein that is crosslinked in the polymer product. This percentage will vary between different protein substrates and depend on the relative amounts of reactive glutamine and lysine in the protein substrates. In this context, the terms "reactive" and "available" should be understood with reference to the particular molecular environment or process conditions. For example, some of the glutamine or lysine residues which are present in the protein to be crosslinked may not be available for a crosslinking reaction because, as a result of protein folding or other condition, the site of the particular glutamine or lysine residue is not accessible for the coupling partner and/or the enzyme. The percentage of available groups that are crosslinked in the present is significantly less than 100 (Goodno et al. Anal. Biochem. (1981) 115:203-211).

The products obtained by the present process can be used for any purpose where crosslinked proteins or other high molecular weight proteinaceous materials have any utility. They may for example be used as binders, thickeners, carriers, etc in food or non-food applications. Their use in foods is especially envisaged, especially as thickeners, gelling agents, emulsifiers, agents improving taste, texture or mouth-feel etc.

The relevance of controlling the degree of polymerisation of a protein ingredient for optimal functionality in a food system can be illustrated by the controlled crosslinking of β-casein in surimi gel. Surimi is a gelating protein made from washed minced fish and is an ideal raw material for analogous sea products, such as imitation crab and shrimp. When a mixture is prepared of 60% surimi protein and 40% β-casein followed by heat-set gelation, the gel strength is approximately half the strength compared to a 100% surimi protein gel. This loss in functionality due to the replacement of part of the surimi protein by (3-casein can be completely overcome by treatment of (3-casein with TG for a specific period of time prior to addition to the surimi protein. Too short or prolonged crosslinking of β-casein with TG results in a diminishing of this desired effect.

### Example 1: Immobilisation of transglutaminase

Microbial transglutaminase (TG) was immobilised onto CNBr- and CH-activated Sepharose (Pharmacia; Uppsala, Sweden). These two materials differ in that CH-activated Sepharose contains a C6-spacer between the matrix support and the reactive group, whereas CNBr-activated Sepharose does not. Attempts to immobilise the enzyme onto the C12-spacer containing epoxy-activated Sepharose failed, which is most likely due to the high pH required for immobilisation onto this material. One mg enzyme per ml gel could be completely coupled to both CNBr- and CH-activated Sepharose as indicated by the fact that no residual activity could be detected in the supernatant. According to the manufacturer, generally 10 mg of protein can be coupled per ml gel. Therefore it is likely that only the enzyme when immobilising 1 mg/ml gel occupies a fraction of the active groups. Remaining active groups were blocked using Tris-HCl buffer, thereby leading to cationization of the matrix.

Specific activity of the immobilised enzyme was found to be 40% of that of soluble TG when using a small substrate like monodansylcadaverin However, when using β-casein as the substrate, the relative specific activity was found to be only 4%

TG was also successfully immobilised onto Eupergit C and C250L (Röhm; Darmstadt, Germany). At a low concentration of 1 mg protein per ml gel not all enzyme became linked to these materials. However, the specific activity with β-casein as substrate was found to be lower than for the Sepharose materials.

Standard assays for the characterisation of the immobilised enzyme in terms of thermal and pH stability showed that immobilisation results in an increase in temperature stability and in an increase in pH stability of transglutaminase versus soluble TG.

### Example 2: Controlled crosslinking using immobilised TG

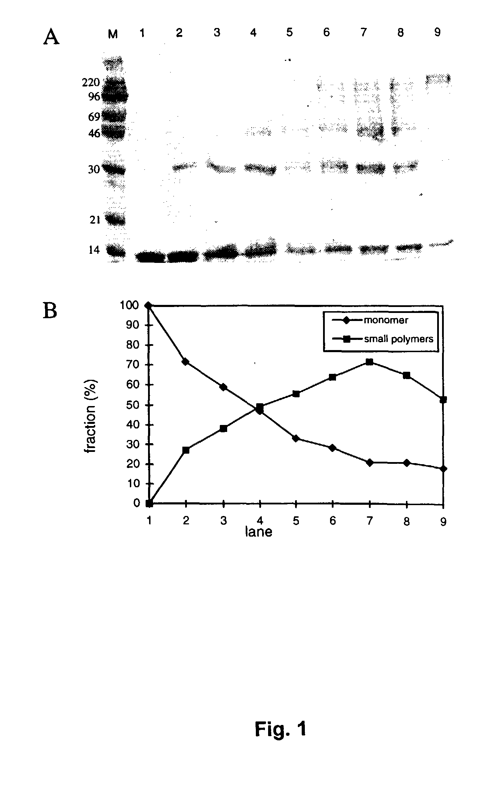

The degree of crosslinking of β-casein and α-lactalbumine was analysed by electrophoresis of samples incubated with TG for increasing time periods. An example is given in Fig. 1A, showing crosslinking of α-lactalbumine by TG immobilised on CNBr-activated Sepharose (furtheron referred to as TG-Sepharose). The degree of crosslinking is quantified by analysing the fraction of polymers between dimer and 6-mer. As can be seen in Fig. 1B, the percentage of small polymers increases as the percentage of monomer decreases, until a maximum is reached; thereafter it decreases again. This can be explained by the fact that after a certain incubation time polymers larger than 6-mers are being formed, thereby decreasing the fraction of small polymers.

The maximum percentage of small polymers of β-casein and α-lactalbumin is compared for crosslinking with soluble TG and TG-Sepharose. The results, which are summarised in Table 1, show that using the immobilised enzyme a higher percentage of small polymers is found for both substrates. Thus, using TG-Sepharose the degree of protein crosslinking can be controlled and the relative amount of small polymers maximised.

When the same substrate concentration is used, similar values are found for α-lactalbumin as for β-casein (Table 1), suggesting that the size and type of the protein that is crosslinked does not influence the relative amount of polymers formed Note that the rate of crosslinking is not included in these numbers, and that it was found to be clearly different, β-casein being crosslinked at a higher rate. Increasing the concentration of β-casein results in a more profound difference between soluble and immobilised TG. This may be explained by the fact that using soluble TG the rate of crosslinking at high substrate concentration is much higher, therefore more rapidly resulting in large polymers, whereas for TG-Sepharose no difference in crosslinking rate was found between low and high substrate concentration

**Table 1.**

| Percentages of small polymers (N= 2-6) of protein substrates produced by soluble and immobilised transglutaminase. | | | |
|---|---|---|---|
| | α-lactalbumin (0.2%) | β-casein (0.2%) | β-casein (2%) |
| soluble TG | 52 | 51 | 40 |
| TG-Sepharose | 72 | 73 | 80 |

### Example 3: Performance of immobilised transglutaminase in two types of bioreactors

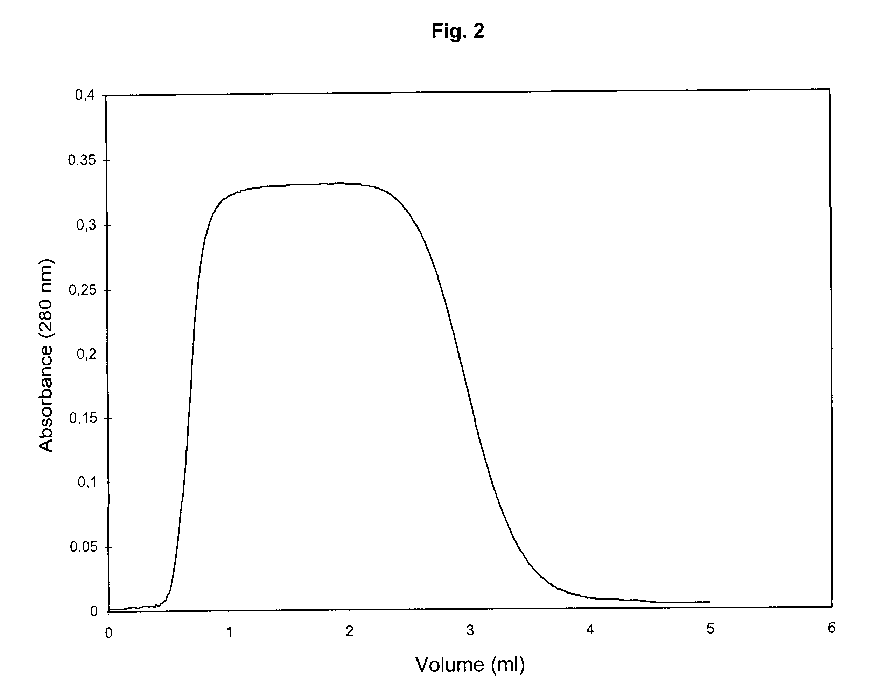

In order to test whether controlled crosslinking using immobilised TG can be scaled up, two types of continuous systems were tested. The fixed-bed reactor and the continuously stirred tank reactor represent two extremes with respect to the level of backmixing, an important characteristic of a bioreactor (Swaisgood (1991) in *Food Enzymology,* Fox, PF., Ed., Elsevier Applied Science, London, Vol. 1, pp 219-270). For the fixed-bed reactor standard FPLC equipment was used. A 1 ml column containing TG immobilised onto CNBr-activated Sepharose was prepared and a solution of 0.2% β-casein was pumped through the column at a controlled flow rate at room temperature. By varying the flow rate and subsequent analysis of the eluent on SDS-PAGE it was shown that the degree of crosslinking is proportional to the time that the substrate protein is exposed to the column material (data not shown). Quantitation of the protein in the eluent indicated that no accumulation of polymers on the column occurred, see Fig. 2. This experiment thus indicates that TG immobilised onto CNBr-activated sepharose can be used in a fix-bed reactor for continuous crosslinking of (soluble) protein substrates.

A continuously stirred tank reactor was constructed using a stirred ultrafiltration cell of a volume of 10 ml with a membrane having a cut-off of 1,000 kDa. Substrate (0.2% β-casein) was continuously fed to and withdrawn from the reactor by a peristaltic pump Product was collected in fractions of 1 ml. At the beginning of the experiment, 5 ml of substrate and 0.5 ml of TG-Sepharose were present in the reactor Analysis of the product and the residual content of the reactor after 30 minutes of incubation showed that accumulation of protein occurred in the reactor, even though the polymers formed were much smaller in size than the cut off value of the membrane.

Based on these experiments it can be concluded that the use of a fixed-bed reactor for the production of polymers with a defined molecular weight is preferred over the use of a continuously stirred tank reactor.

## Claims

1. A process for producing a crosslinked protein, by reaction of a protein containing reactive glutamine residues with a transglutaminase, resulting in coupling by isopeptide bonds, *characterised* in that a partially crosslinked protein is produced by stopping the reaction, without inactivating the transglutaminase, at a moment when there are still reactive groups available for crosslinking.

2. A process according to claim 1, in which the transglutaminase is coupled to a solid support.

3. A process according to claim 2, in which the transglutaminase is separated from the partially crosslinked product.

4. A process according to any one of claims 1-3, in which the reaction is stopped when there are at least 2, preferably at least 4 and less than 50, preferably less than 30 protein units bound by isopeptide bonds.

5. A process according to any one of claims 1-4, in which the transglutaminase originates from a micro-organism.

6. A process according to claim 5, in which the transglutaminase originates from a micro-organism of the genus *Streptoverticillium,* in particular form the species *Streptoverticillium mobaraense.*

7. A process according to any one of claims 1-6, in which the transglutaminase is immobilised on a Sepharose-type support.

8. Use of crosslinked protein according to any one of claims 1-7 as a protein ingredient in food.

9. Partially crosslinked protein obtainable by the process of any one of claims 1-7, having a molecular weight of between 10,000 and 1,000,000 Da.

10. Partially crosslinked protein according to claim 9, in which the protein comprises a protein selected from soy proteins, cereal proteins, meat proteins, caseins and albumins.
